# EUROPEAN PATENT APPLICATION

(11) **EP 4 631 990 A1**
(43) Date of publication of application: **15.10.2025**
(21) Application number: 23899888.4
(22) Date of filing: 01.12.2023
(51) Int. Cl.: C08G 63/20, C08G 63/85, C08L 67/02

(54) **BIODEGRADABLE POLYESTER COMPOSITION AND PREPARATION METHOD THEREFOR AND USE THEREOF**

(30) Priority: 08.12.2022 CN 202211574166
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN)
(72) Inventor: LU, Changli, Guangzhou, Guangdong 510663 (CN); CHEN, Pingxu, Guangzhou, Guangdong 510663 (CN); YE, Nanbiao, Guangzhou, Guangdong 510663 (CN); ZENG, Xiangbin, Guangzhou, Guangdong 510663 (CN); JIAO, Jian, Guangzhou, Guangdong 510663 (CN); GUO, Zhilong, Guangzhou, Guangdong 510663 (CN); OUYANG, Chunping, Guangzhou, Guangdong 510663 (CN); WANG, Chaojun, Guangzhou, Guangdong 510663 (CN); ZHANG, Erjie, Guangzhou, Guangdong 510663 (CN); YAO, Yi, Guangzhou, Guangdong 510663 (CN); ZHANG, Chuanhui, Guangzhou, Guangdong 510663 (CN)
(74) Representative: Petraz, Gilberto Luigi
(86) International application number: PCT/CN2023/135828
(87) International publication number: WO 2024/120310

(57) **Abstract**

Disclosed in the present invention are a biodegradable polyester composition, a preparation method therefor and use thereof. The biodegradable polyester composition of the present invention includes a biodegradable polyester and a titanium element. Polymerizable monomers of the biodegradable polyester include: an aromatic dicarboxylic acid or an esterified product thereof, or a mixture thereof; an aliphatic dicarboxylic acid or an esterified product thereof, or a mixture thereof; a dihydroxy compound; and a chain extender. A content of the titanium element in the biodegradable polyester composition is 55-86 ppm; and an acid number of the biodegradable polyester composition is 1.10-1.96 mg KOH/g. By controlling the content of the titanium element in the biodegradable polyester composition and the acid number and combining with specific types and contents of the polymerizable monomers, a product prepared from the biodegradable polyester composition has both good anti-aging performance and excellent disintegration performance, and can be used for preparing degradable fruit and vegetable bags and garbage bags.

## Description

### TECHNICAL FIELD

The present invention relates to the technical field of degradable materials, and more specifically relates to a biodegradable polyester composition, a preparation method therefor and use thereof.

### BACKGROUND

Polyester mixtures with aliphatic-aromatic polyesters as basic resins have good processability and mechanical properties, which can be processed by various molding methods, such as film blowing and blow molding, and have been widely used in fields, such as fruit and vegetable bags and garbage bags. In the fields, products, such as the fruit and vegetable bags and the garbage bags, are required to have good mechanical properties before use and during use and be capable of being degraded along with kitchen waste during a composting process after being discarded without the need to separate the garbage bags containing the kitchen waste for incineration treatment. Based on the demands, biodegradable polyester products, such as the fruit and vegetable bags and the garbage bags, are required to not only have good anti-aging performance during a shelf life, but also have a rapid disintegration ability after being discarded.

CN110678502A discloses a polymer composition used for a highly disintegrable film. A low-temperature disintegration rate of the film is improved by using the composition prepared from an aliphatic polyester, an aliphatic-aromatic polyester and polyhydroxyalkanoate at a specific ratio. The polymer composition has been used in the field of mulching films. However, the anti-aging performance of products prepared from the polymer composition during the shelf life is not concerned. Since the film has the higher disintegration rate and is also prone to performance degradation during storage, the film cannot be used normally.

Therefore, it is necessary to develop a biodegradable polyester composition, and products prepared from the same not only have good anti-aging performance during the shelf life, but also can be rapidly degraded after being discarded, and have excellent disintegration performance.

### SUMMARY

To overcome the above defect that the long shelf life and the high disintegration performance cannot be balanced in the prior art, the present invention provides a biodegradable polyester composition. By controlling a content of a titanium element to 55-86 ppm and an acid number to 1.10-1.96 mg KOH/g in the biodegradable polyester composition and combining with specific types and contents of polymerizable monomers, a product prepared from the biodegradable polyester composition has both excellent anti-aging performance during the shelf life and excellent disintegration performance after being discarded.

Another objective of the present invention is to provide a method for preparing the above biodegradable polyester composition.

Another objective of the present invention is to provide use of the above biodegradable polyester composition.

To solve the above technical problems, technical solutions adopted by the present invention are as follows.

A biodegradable polyester composition is provided, and the biodegradable polyester composition includes a biodegradable polyester and a titanium element;
monomers for preparing the biodegradable polyester include:
component A, a dicarboxylic acid compound, based on a total molar amount of the component A, including:
a1, 40-52 mol% of an aromatic dicarboxylic acid or an esterified product thereof, or a mixture thereof, and
a2, 48-60 mol% of an aliphatic dicarboxylic acid or an esterified product thereof, or a mixture thereof;
component B, a dihydroxy compound, based on the total molar amount of the component A, including: a C₂-C₆ aliphatic alkanediol with at least the same molar amount as the component A, or a mixture thereof; and
component C, a chain extender, accounting for 0-3 wt.% based on a weight of the biodegradable polyester composition;
a content of the titanium element in the biodegradable polyester composition is 55 ppm - 86 ppm; and
an acid number of the biodegradable polyester composition is 1.10 mg KOH/g - 1.96 mg KOH/g.

The acid number of the biodegradable polyester composition is tested in accordance with a method of the DIN EN 12634-1998 standard.

The content of the titanium element in the biodegradable polyester composition is analyzed and tested by ICP-OES with reference to a method of US EPA 3052:1996.

Synthesis of the biodegradable polyester is a reversible reaction. On one hand, the monomers are synthesized to obtain the biodegradable polyester with a high molecular weight under the action of a catalyst. On the other hand, the biodegradable polyester with the high molecular weight also undergoes a thermal degradation reaction under the action of the catalyst. An addition amount of the catalyst significantly affects the reaction efficiency. When the content of the catalyst is too low, a polymerization reaction is slow or difficult to occur, or requires to use more harsh reaction conditions such as high temperature, low vacuum, long retention time, etc. When the content of the catalyst is too high, although improvement of the polymerization reaction efficiency is facilitated, the reaction efficiency of the thermal degradation reaction of the biodegradable polyester is also improved simultaneously. Therefore, during the synthesis of the biodegradable polyester, in addition to selecting the appropriate monomer types, the monomer addition amounts, the reaction temperature, the reaction pressure and the retention time, it is also necessary to select the appropriate catalyst and the catalyst addition amount. A titanium catalyst, such as tetrabutyl titanate or tetraisopropyl titanate, has been proven to be a commonly used catalyst suitable for a polyester system.

The acid number is a basic parameter usually used for characterizing the performance of the biodegradable polyester in literature and practice. The acid number of the biodegradable polyester is used to measure a number of an unreacted carboxylic acid group at a terminal end of a polyester chain. Therefore, similar to acidity, the acid number represents an acidic component of a polymer. Under normal circumstances, the biodegradable polyester with low acid number is conducive to achieving better hydrolytic stability and improved anti-aging performance of the polyester, but also simultaneously means that the polyester needs to be disintegrated for a longer time after being discarded until complete degradation is achieved.

The inventor unexpectedly finds through studies that when the content of the titanium element in the biodegradable polyester composition ranges from 55 ppm to 86 ppm and the acid number ranges from 1.10 mg KOH/g to 1.96 mg KOH/g, a product prepared from the biodegradable polyester composition of the present invention has good anti-aging performance, can be rapidly degraded after being discarded, and has excellent disintegration performance.

When the biodegradable polyester composition of the present invention is stored at 60°C and at a humidity of 95% for 72 h, a melt flow rate change ratio η before and after storage is ≤3.90, and η=MFR₁/MFR₀,
wherein MFR₁ represents a melt flow rate of the biodegradable polyester composition after storage at 60°C and at a humidity of 95% for 72 h, and MFR₀ represents an initial melt flow rate of the biodegradable polyester composition before storage.

In preferred embodiments, when the biodegradable polyester composition is stored at 60°C and at a humidity of 95% for 72 h, the melt flow rate change ratio η before and after storage is ≤2.95.

With reference to a method of the ISO 14855-1-2012 standard, a weight retention rate of the biodegradable polyester composition of the present invention placed for 42 days is ≤30%.

In preferred embodiments, with reference to the method of the ISO 14855-1-2012 standard, the weight retention rate of the biodegradable polyester composition placed for 42 days is ≤18%.

Under normal circumstances, when the content of the aromatic dicarboxylic acid in the aliphatic-aromatic polyester is higher, the mechanical properties and processing performance of the polyester are better. Under the circumstance that other performance parameters are the same, the degradation performance of the polyester is deteriorated when the content of the aromatic dicarboxylic acid is too high. In a particularly preferred embodiment, the acid component A of the aliphatic-aromatic polyester includes more than 50 mol% of the aliphatic dicarboxylic acid a2. A characteristic of these polyesters have one feature of excellent biodegradability.

Preferably, the content of the titanium element in the biodegradable polyester composition is 63 ppm - 79 ppm.

Preferably, the acid number of the biodegradable polyester composition is 1.18 mg KOH/g - 1.45 mg KOH/g.

The inventor finds through studies that when the content of the titanium element and the acid number of the biodegradable polyester composition meet the above range, the material has better comprehensive anti-aging performance and disintegration performance.

The biodegradable polyester composition is mostly processed by an extrusion method, which requires higher melt strength. Thus, the melt flow rate is usually required to be lower. However, the too low melt flow rate often leads to excessive melt pressure and high energy consumption during processing.

Under normal circumstances, the melt flow rate is lower when the molecular weight of the biodegradable polyester composition is higher. The molecular weight of the biodegradable polyester composition also limits and affects the aging performance and disintegration performance of a product prepared therefrom. Under normal circumstances, when the molecular weight is higher, the product can be stored for a longer time during storage, and the product also needs to be disintegrated for a longer time after being discarded until complete degradation is achieved.

Preferably, the melt flow rate of the biodegradable polyester composition at 190°C and 2.16 kg is ≤10 g/10 min in accordance with the standard EN ISO 1133-2-2011.

More preferably, the melt flow rate of the biodegradable polyester composition at 190°C and 2.16 kg is 1 g/10 min - 8.5 g/10 min in accordance with the standard EN ISO 1133-2-2011.

Further preferably, the melt flow rate of the biodegradable polyester composition at 190°C and 2.16 kg is 2.1 g/10 min - 5.4 g/10 min in accordance with the standard EN ISO 1133-2-2011.

Preferably, the component A includes:
a1, 44-51 mol% of the aromatic dicarboxylic acid or an esterified product thereof, or a mixture thereof, and
a2, 49-56 mol% of the aliphatic dicarboxylic acid or an esterified product thereof, or a mixture thereof.

More preferably, the component A includes:
a1, 47.3-50.6 mol% of the aromatic dicarboxylic acid or an esterified product thereof, or a mixture thereof, and
a2, 49.4-52.7 mol% of the aliphatic dicarboxylic acid or an esterified product thereof, or a mixture thereof.

The aromatic dicarboxylic acid may be selected from an aromatic dicarboxylic acid having 8-20 carbon atoms. Preferably, the aromatic dicarboxylic acid has 8-12 carbon atoms.

Optionally, the aromatic dicarboxylic acid is one or more of terephthalic acid, isophthalic acid, 2,6-naphthoic acid, and/or 1,5-naphthoic acid.

In addition, the esterified product of the aromatic dicarboxylic acid includes: a di-C₁-C₆ alkyl ester, such as dimethyl ester, diethyl ester, di-n-propyl ester, diisopropyl ester, di-n-butyl ester, diisobutyl ester, di-tert-butyl ester, di-n-pentyl ester, diisopentyl ester, or di-n-hexyl ester. An acid anhydride of the aromatic dicarboxylic acid is also a suitable derivative for forming an ester.

Preferably, the aromatic dicarboxylic acid is the terephthalic acid.

The aliphatic dicarboxylic acid may be selected from an aliphatic dicarboxylic acid having 2-40 carbon atoms. Preferably, the aliphatic dicarboxylic acid has 4-14 carbon atoms.

Optionally, the aliphatic dicarboxylic acid is one or more of succinic acid, glutaric acid, adipic acid, azelaic acid, sebacic acid, or brassylic acid.

Preferably, the aliphatic dicarboxylic acid is the adipic acid and/or the sebacic acid.

The dihydroxy compound may be selected from a branched or linear alkanediol having 2-6 carbon atoms.

Optionally, the dihydroxyl compound is one or more of ethylene glycol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, and 2-ethyl-2-butyl-1,3-propanediol.

Preferably, the dihydroxy compound is the 1,4-butanediol.

Preferably, a molar ratio of the component B to the component A is 1.2 - 2.4. More preferably, the molar ratio of the component B to the component A is 1.3 - 1.8.

The biodegradable polyester composition includes, based on a total weight of the biodegradable polyester composition, 0-3 wt%, preferably 0.01-2 wt%, more preferably 0.05-1.5 wt%, and particularly preferably 0.01-0.45 wt% of a crosslinking agent with at least three functional groups.

Preferably, in the compound with at least three functional groups, the functional groups are 3-6 hydroxy groups.

Preferably, the compound with at least three functional groups is one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, and 1,2,4,5-benzenetetracarboxylic acid.

More preferably, the compound with at least three functional groups is one or more of the trimethylolpropane, the pentaerythritol, or the glycerol.

Preferably, the chain extender (component C) includes one or more of the following components:
c1, a difunctional or low-functional isocyanate and/or isocyanurate,
c2, a difunctional or low-functional peroxide,
c3, a difunctional or low-functional epoxide, and
c4, difunctional or low-functional oxazoline, oxazine, caprolactam, and/or carbodiimide.

The component c1 used includes an isocyanate with 2 or more than 2 functional groups or a mixture of different isocyanates. An aromatic or aliphatic diisocyanate may be used, and an isocyanate with a higher degree of functionality may also be used.

For the present invention, the aromatic diisocyanate c1 is particularly toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate.

For the present invention, the aliphatic diisocyanate c1 is particularly any linear or branched alkylene diisocyanate or cycloalkylene diisocyanate containing 2 to 20 carbon atoms, preferably 3 to 12 carbon atoms, for example, hexamethylene diisocyanate, isophorone diisocyanate, or methylene bis(4-isocyanatocyclohexane). Particularly preferably, the aliphatic diisocyanate c1 is the hexamethylene diisocyanate or the isophorone diisocyanate, particularly the hexamethylene diisocyanate.

Preferably, the isocyanurate is an aliphatic isocyanurate, which is derived from alkylene diisocyanurate or cycloalkylene diisocyanurate having 2 to 20 carbon atoms, preferably 3 to 12 carbon atoms.

A use amount of the component c1, based on the total weight of the biodegradable polyester composition, is usually 0-3 wt.%, preferably 0.05-2 wt.%, and particularly preferably 0.1-1.5 wt.%.

Suitable examples of the peroxide with 2 or more than 2 functional groups (component c2) are selected from the following compounds: benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, and tert-butylperoxy cumene.

A use amount of the component c2, based on the total weight of the biodegradable polyester composition, is usually 0-3 wt.%, preferably 0.1-2 wt.%, and particularly preferably 0.2-1 wt.%.

The epoxide with 2 or more than 2 functional groups (component c3) is, for example, hydroquinone, diglycidyl ether, resorcinol diglycidyl ether, 1,6-hexanediol diglycidyl ether, and hydrogenated bisphenol A diglycidyl ether. Other examples of the epoxide include diglycidyl terephthalate, diglycidyl tetrahydrophthalate, diglycidyl hexahydrophthalate, dimethyldiglycidyl phthalate, phenylene diglycidyl ether, ethylene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, and polybutylene glycol diglycidyl ether.

The particularly suitable component, epoxide with 2 or more than 2 functional groups, is a copolymer based on styrene, acrylate, and/or methacrylate and containing an epoxy group. A unit with the epoxy group is preferably (methyl) glycidyl acrylate.

A use amount of the component c3, based on the total weight of the biodegradable polyester composition, is usually 0-3 wt.%, preferably 0.1-2 wt.%, and particularly preferably 0.2-1 wt.%.

The component c4 used is the oxazoline, oxazine, caprolactam, and/or carbodiimide with 2 or more than 2 functional groups.

Particularly preferably, a bridging portion of dioxazoline and dioxazine is a single bond, (CH₂)z-alkylene, wherein z=2, 3, or 4, for example, methylene, ethane-1,2-diyl, propane-1,3-diyl, propane-1,2-diyl, or phenylene. The particularly preferred dioxazoline that can be mentioned is 2,2'-bis(2-oxazoline), bis(2-oxazolinyl)methane, 1,2-bis(2-oxazolinyl)ethane, 1,3-bis(2-oxazolinyl)propane, 1,4-bis(2-oxazolinyl)butane, 1,4-bis(2-oxazolinyl)benzene, 1,2-bis(2-oxazolinyl)benzene, or 1,3-bis(2-oxazolinyl)benzene.

Examples of the carbodiimide include N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, and di-tert-butylcarbodiimide.

A use amount of the component c4, based on the total weight of the biodegradable polyester composition, is usually 0-3 wt.%, preferably 0.1-2 wt.%, and particularly preferably 0.2-1 wt.%. The component c4 may also be used as an acid scavenger.

Preferably, the monomers for preparing the biodegradable polyester include:
the component A, including:
a1, terephthalic acid or an ester thereof, and
a2, adipic acid or sebacic acid, an ester thereof, or a mixture thereof;
the component B, including:
   b1, 1,4-butanediol, and
   b2, one or more of glycerol, pentaerythritol, or trimethylolpropane; and
   the component C, hexamethylene diisocyanate.

The present invention also protects a method for preparing the above biodegradable polyester composition, which includes the following steps:
mixing the component A and the component B with or without addition of a titanium catalyst to generate a paste, and then carrying out the following operations:
step i), allowing the paste to undergo an esterification or transesterification reaction with all or a part of the titanium catalyst until a viscosity number of an esterification or transesterification product determined in a phenol/o-dichlorobenzene solution with a weight ratio of 1:1 under a constant-temperature water bath at 25±0.05°C according to GB/T 17931-1999 is 14 ml/g - 19 ml/g;
step ii), allowing the esterification or transesterification product obtained in the step i) to undergo a pre-polycondensation reaction until a viscosity number of a prepolymer determined in a phenol/o-dichlorobenzene solution with a weight ratio of 1:1 under a constant-temperature water bath at 25±0.05°C according to GB/T 17931-1999 is 62 ml/g - 78 ml/g; and
step iii), allowing the prepolymer obtained in the ii) to undergo a polycondensation reaction until a viscosity number of a final polymerization product determined in a phenol/o-dichlorobenzene solution with a weight ratio of 1:1 under a constant-temperature water bath at 25±0.05°C according to GB/T 17931-1999 is 140 ml/g - 210 ml/g so as to obtain the biodegradable polyester composition.

If necessary, under the circumstance of containing the component C, a step iv) may also be carried out after the step iii): allowing the final polymerization product obtained in the step iii) and the chain extender to undergo a chain extension reaction until a viscosity number of a chain growth product determined in a phenol/o-dichlorobenzene solution with a weight ratio of 1:1 under a constant-temperature water bath at 25±0.05°C according to GB/T 17931-1999 is 160 ml/g - 240 ml/g so as to obtain the biodegradable polyester composition.

The excessive diol component is usually removed by distillation and returned to a loop after, for example, distillation purification.

Preferably, the titanium catalyst is tetrabutyl titanate and/or tetraisopropyl titanate.

In the step i), a total amount or 50-80 wt.% of the total amount of the catalyst is measured and added. Controlling the addition amount of the catalyst can make a subsequent processing process more stable.

In the step i), a temperature is set at 228-235°C, and a pressure is set at 85-105 KPa. The step i) can be carried out in a mixing device, for example, a vertical reactor with a stirrer. A typical retention time is 120-190 min. Under normal circumstances, a prepolyester with a viscosity number of 14 ml/g - 19 ml/g as determined in a phenol/o-dichlorobenzene solution at a weight ratio of 1:1 under a constant-temperature water bath at 25±0.05°C according to GB/T 17931-1999 can be produced after the reaction time.

In the step ii), a liquid obtained in the step i) (esterification or transesterification) is added into a reactor suitable for the pre-condensation reaction, if appropriate, together with the remaining catalyst. A temperature is set at 242-248°C, and a pressure is set at 800-1,800 Pa.

The step ii) can be carried out in a mixing device, for example, a vertical reactor with a stirrer. A typical retention time is 170-240 min. Under normal circumstances, a prepolyester with a viscosity number of 62 ml/g - 78 ml/g as determined in a phenol/o-dichlorobenzene solution at a weight ratio of 1:1 under a constant-temperature water bath at 25±0.05°C according to GB/T 17931-1999 can be produced after the reaction time.

Between the step ii) and the step iii), if necessary, a passivator may be added into the reaction system. The available passivator is usually a phosphorus compound, including phosphoric acid, phosphorous acid, and esters thereof. When the highly active titanium catalyst is used in the system, the passivator is usually added in the step iii). An addition amount of the passivator may be 0.01-0.08 wt.%, preferably 0.02-0.05 wt.%, based on a weight of the final polymerization product after the step iii).

If appropriate, between the step ii) and the step iii), a color stabilizer used in the condensation process is mixed with the pre-condensed polyester. The available color stabilizer is particularly a phosphorus compound, for example, one or more of phosphoric acid, phosphorous acid, triphenyl phosphite, triphenyl phosphate, IrgafosPEPQ, sodium hypophosphite, or sodium phosphite. The use of the color stabilizer usually leads to decrease of a condensation rate. The triphenyl phosphate is a particularly suitable color stabilizer because it has no adverse impact on the condensation rate. An addition amount of the color stabilizer may be 0.01-0.08 wt.%, preferably 0.02-0.05 wt.%, based on the weight of the final polymerization product after the step iii).

Between the step ii) and the step iii), if necessary, a titanium-containing compound, other than the titanium catalyst, may be added into the reaction system. The available titanium-containing compound is one or more of titanium dioxide, titanium tetrachloride, ferrous titanate, or barium metatitanate. An addition amount of the titanium-containing compound may be 0-0.06 wt.%, preferably 0.001-0.04 wt.%, based on the weight of the final polymerization product after the step iii).

In the present invention, in addition to adjusting and controlling the content of the titanium catalyst, the content of the titanium element can also be adjusted by adding the titanium-containing compound.

In the step iii), the polycondensation process is carried out in a reactor such as a rotating disk reactor or a cage-shaped reactor; a temperature of the polycondensation reaction is preferably 252-256°C; a pressure is set at 100-320 Pa; and a time of the polycondensation reaction is preferably 150-210 min. After the reaction in the step iii), the reaction product with the viscosity number of 140 ml/g - 210 ml/g as determined in a phenol/o-dichlorobenzene solution with a weight ratio of 1:1 under a constant-temperature water bath at 25±0.05°C according to GB/T 17931-1999 can be produced.

If necessary, the step iv) can be carried out after the step iii) is completed: adding the final polymerization product obtained in the step iii) into a twin-screw extruder or a static mixer together with the chain extender (component C) with a use amount of 0-3 wt%, preferably 0.05-2 wt%, and particularly preferably 0.1-1.5 wt%, based on the weight of the biodegradable polyester composition at a reaction temperature of 195-210°C for a retention time of 5-12 min to obtain the chain growth product. The viscosity number of the chain growth product determined in a phenol/o-dichlorobenzene solution at a weight ratio of 1:1 under a constant-temperature water bath at 25±0.05°C according to GB/T 17931-1999 is 160 ml/g - 240 ml/g.

The present invention also protects a degradable mixture, which includes the following parts by weight of components:
5-95 parts of the above biodegradable polyester composition, and
5-95 parts of one or more of an aliphatic polyester, starch, cellulose, polyhydroxyalkanoate, polyglycolic acid, or polylactic acid.

The present invention also protects use of the above degradable mixture in preparation of fruit and vegetable bags and garbage bags.

Compared with the prior art, the present invention has the following beneficial effects.

According to the biodegradable polyester composition developed by the present invention, by controlling the content of the titanium element in the biodegradable polyester composition to 55 ppm - 86 ppm and the acid number to 1.10 mg KOH/g - 1.96 mg KOH/g and combining with specific types and contents of the polymerizable monomers, a product prepared from the biodegradable polyester composition has good anti-aging performance, can be rapidly degraded after being discarded, has excellent disintegration performance, and can be used for preparing fruit and vegetable bags and garbage bags.

### DETAILED DESCRIPTION OF EMBODIMENTS

The present invention is further illustrated below in conjunction with specific embodiments.

Raw materials in examples and comparative examples are all commercially available.

In respective examples and comparative examples, methods for detecting molar contents of an aromatic dicarboxylic acid and an aliphatic dicarboxylic acid, a content of a titanium element and an acid number of biodegradable polyester compositions are as follows.

Content of titanium element: The content of the titanium element in the biodegradable polyester compositions was analyzed by ICP-OES and tested according to the following procedure with reference to US EPA Method 3052:1996.

About 0.1 g of the biodegradable polyester composition was weighed and crushed, 5 ml of nitric acid was added to completely immerse the biodegradable polyester composition, then 1.0 mL of hydrogen peroxide was dropped to carry out a reaction for 2 min, and the mixture was sealed in a microwave digestion tank for digestion at 210°C for 3 to 4 hours, cooled to room temperature, filtered with a 0.45 µm filter membrane, diluted to 50 mL with distilled water and tested by ICP-OES.

Acid number: The acid number of sample was determined with reference to DIN EN 12634-1998 in October, 1998. A solvent mixture used included 1 part by volume of dimethyl sulfoxide, 8 parts by volume of isopropanol and 7 parts by volume of toluene, wherein the volume of the solvent mixture was 150 mL. According to the DIN EN 12634-1998 standard, the samples were pre-titrated to determine an appropriate sample mass and ensure that a volume of a titration solution consumed was 2-3 mL. The samples were added into the solvent mixture and heated to 70-85°C to ensure that all of the samples were completely dissolved into clear solutions, and during the titration, the temperatures of the solutions were maintained at 65-75°C to avoid precipitation of the samples. Tetrabutylammonium hydroxide was selected as the titration solution while avoiding the use of highly toxic tetramethylammonium hydroxide. Meanwhile, to prevent the solvent mixture from absorbing CO₂ from the air and affecting the volume of the titration solution consumed by a blank solvent, when the volume of the titration solution consumed by the blank solvent was tested, the blank solvent was pre-treated in the same test operation process as the samples, for example, the blank solvent was subjected to heating treatment with the same time and temperature, and then the blank solvent was titrated.

Molar contents of the aromatic dicarboxylic acid and the aliphatic dicarboxylic acid: 20 mg of the biodegradable polyester composition samples were weighed and dissolved in 0.6 mL of deuterated chloroform to determine ¹H NMR at room temperature using an AV 500 nuclear magnetic resonance spectrometer of Bruker. The chloroform as a calibration solvent has a peak at around 7.26 ppm. The aromatic dicarboxylic acid, such as terephthalic acid, has 4 hydrogen atoms on a benzene ring in a repeating unit at around 8.10 ppm. The aliphatic dicarboxylic acid, such as adipic acid, has 4 hydrogen atoms of two CH₂ units adjacent to a carbonyl group in a repeating unit at around 2.33 ppm. The molar contents of the diacid components may be expressed by integral areas (I_{T} and I_{A}) of the two peaks at 8.10 ppm and 2.33 ppm:
molar content of aromatic dicarboxylic acid in aliphatic-aromatic polyester=I_{T}/(I_{T}+I_{A})×100%; and
molar content of aliphatic dicarboxylic acid in aliphatic-aromatic polyester=I_{A}(I_{T}+I_{A})×100%.

Unless otherwise specified, reagents, methods and equipment used in the present invention are conventional reagents, methods and equipment in the technical field.

### Examples 1-14

Example 1 provides a biodegradable polyester composition. A preparation method includes the following steps.

Step i): 445 kg of terephthalic acid, 437 kg of adipic acid, 690 kg of 1,4-butanediol, 3.45 kg of glycerol and 0.350 kg of tetrabutyl titanate were physically mixed at normal temperature in an esterification reactor, and then, the mixture was allowed to undergo an esterification reaction at 230°C and at a pressure of 95 KPa for 165 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 16 ml/g.

Step ii): The esterification product was introduced into a vertical stirring and full-mixing reactor, 0.265 kg of tetrabutyl titanate was added into the reactor, a reaction was carried out under heating to 245°C at a pressure of 1,300 Pa for 212 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 65 ml/g.

Step iii): 0.17 kg of phosphorous acid was added into the prepolymer in the step ii), meanwhile, the reaction mixture was transferred into a final polymerization reactor to carry out polycondensation at a temperature of 252°C and a pressure of 145 Pa for 150 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 142 ml/g.

Step iv): The final polymerization product in the step iii) was allowed to pass through a static mixer, 2.1 kg of hexamethylene diisocyanate was added to carry out a blending reaction at 200°C for 8 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 173 ml/g.

Example 2 provides a biodegradable polyester composition. A preparation method includes the following steps.

Step i): 508 kg of terephthalic acid, 437 kg of adipic acid, 730 kg of 1,4-butanediol, 3.65 kg of glycerol and 0.325 kg of tetraisopropyl titanate were physically mixed at normal temperature in an esterification reactor, and then, the mixture was allowed to undergo an esterification reaction at 235°C and at a pressure of 85 KPa for 180 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 17 ml/g.

Step ii): The esterification product was introduced into a vertical stirring and full-mixing reactor, 0.220 kg of tetraisopropyl titanate was added into the reactor, a reaction was carried out under heating to 242°C at a pressure of 1,100 Pa for 228 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 74 ml/g.

Step iii): 0.19 kg of phosphorous acid was added into the prepolymer in the step ii), meanwhile, the reaction mixture was transferred into a final polymerization reactor to carry out polycondensation at a temperature of 254°C and a pressure of 130 Pa for 186 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 174 ml/g.

Example 3 provides a biodegradable polyester composition. A preparation method includes the following steps.

Step i): 390 kg of terephthalic acid, 437 kg of adipic acid, 645 kg of 1,4-butanediol, 4.66 kg of trimethylolpropane and 0.345 kg of tetrabutyl titanate were physically mixed at normal temperature in an esterification reactor, and then, the mixture was allowed to undergo an esterification reaction at 228°C and at a pressure of 105 KPa for 170 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 15 ml/g.

Step ii): The esterification product was introduced into a vertical stirring and full-mixing reactor, 0.230 kg of tetrabutyl titanate was added into the reactor, a reaction was carried out under heating to 246°C at a pressure of 1,800 Pa for 170 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 62 ml/g.

Step iii): 0.15 kg of phosphorous acid was added into the prepolymer in the step ii), meanwhile, the reaction mixture was transferred into a final polymerization reactor to carry out polycondensation at a temperature of 252°C and a pressure of 124 Pa for 167 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 140 ml/g.

Step iv): The final polymerization product in the step iii) was allowed to pass through a static mixer, 1.6 kg of hexamethylene diisocyanate was added to carry out a blending reaction at 200°C for 10 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 173 ml/g.

Example 4 provides a biodegradable polyester composition. A preparation method includes the following steps.

Step i): 386 kg of dimethyl terephthalate, 437 kg of adipic acid, 600 kg of 1,4-butanediol, 3.00 kg of glycerol and 0.325 kg of tetrabutyl titanate were physically mixed at normal temperature in an esterification reactor, and then, the mixture was allowed to undergo an esterification reaction at 233°C and at a pressure of 100 KPa for 190 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 14 ml/g.

Step ii): The esterification product was introduced into a vertical stirring and full-mixing reactor, 0.205 kg of tetrabutyl titanate was added into the reactor, a reaction was carried out under heating to 248°C at a pressure of 800 Pa for 210 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 72 ml/g.

Step iii): 0.15 kg of phosphorous acid was added into the prepolymer in the step ii), meanwhile, the reaction mixture was transferred into a final polymerization reactor to carry out polycondensation at a temperature of 253°C and a pressure of 118 Pa for 194 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 175 ml/g.

Example 5 provides a biodegradable polyester composition. A preparation method includes the following steps.

Step i): 540 kg of terephthalic acid, 437 kg of adipic acid, 755 kg of 1,4-butanediol, 3.75 kg of glycerol and 0.425 kg of tetrabutyl titanate were physically mixed at normal temperature in an esterification reactor, and then, the mixture was allowed to undergo an esterification reaction at 235°C and at a pressure of 85 KPa for 185 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 18 ml/g.

Step ii): The esterification product was introduced into a vertical stirring and full-mixing reactor, 0.250 kg of tetrabutyl titanate was added into the reactor, a reaction was carried out under heating to 244°C at a pressure of 1,460 Pa for 217 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 73 ml/g.

Step iii): 0.19 kg of phosphorous acid was added into the prepolymer in the step ii), meanwhile, the reaction mixture was transferred into a final polymerization reactor to carry out polycondensation at a temperature of 252°C and a pressure of 121 Pa for 177 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 172 ml/g.

Example 6 provides a biodegradable polyester composition. A preparation method includes the following steps.

Step i): 515 kg of terephthalic acid, 437 kg of adipic acid, 740 kg of 1,4-butanediol, 3.75 kg of glycerol and 0.356 kg of tetrabutyl titanate were physically mixed at normal temperature in an esterification reactor, and then, the mixture was allowed to undergo an esterification reaction at 235°C and at a pressure of 100 KPa for 173 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 14 ml/g.

Step ii): The esterification product was introduced into a vertical stirring and full-mixing reactor, 0.250 kg of tetrabutyl titanate was added into the reactor, a reaction was carried out under heating to 248°C at a pressure of 800 Pa for 240 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 58 ml/g.

Step iii): 0.19 kg of phosphorous acid and 0.012 kg of titanium dioxide were added into the prepolymer in the step ii), meanwhile, the reaction mixture was transferred into a final polymerization reactor to carry out polycondensation at a temperature of 255°C and a pressure of 105 Pa for 180 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 173 ml/g.

Example 7 provides a biodegradable polyester composition. A preparation method includes the following steps.

Step i): 535 kg of terephthalic acid, 651 kg of sebacic acid, 760 kg of 1,4-butanediol, 4.55 kg of glycerol and 0.450 kg of tetrabutyl titanate were physically mixed at normal temperature in an esterification reactor, and then, the mixture was allowed to undergo an esterification reaction at 232°C and at a pressure of 90 KPa for 175 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 19 ml/g.

Step ii): The esterification product was introduced into a vertical stirring and full-mixing reactor, 0.260 kg of tetrabutyl titanate was added into the reactor, a reaction was carried out under heating to 247°C at a pressure of 960 Pa for 208 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 78 ml/g.

Step iii): 0.230 kg of phosphorous acid and 0.045 kg of titanium tetrachloride were added into the prepolymer in the step ii), meanwhile, the reaction mixture was transferred into a final polymerization reactor to carry out polycondensation at a temperature of 256°C and a pressure of 100 Pa for 210 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 182 ml/g.

Step iv): The final polymerization product in the step iii) was allowed to pass through a static mixer, 3.2 kg of hexamethylene diisocyanate was added to carry out a blending reaction at 200°C for 7 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 209 ml/g.

Example 8 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.415 kg of tetrabutyl titanate were physically mixed at normal temperature in an esterification reactor, and then, the mixture was allowed to undergo an esterification reaction at 234°C and at a pressure of 85 KPa for 182 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 18 ml/g.

Step ii): The esterification product was introduced into a vertical stirring and full-mixing reactor, 0.260 kg of tetrabutyl titanate was added into the reactor, a reaction was carried out under heating to 245°C at a pressure of 1,210 Pa for 230 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 69 ml/g.

Step iii): 0.170 kg of phosphorous acid was added into the prepolymer in the step ii), meanwhile, the reaction mixture was transferred into a final polymerization reactor to carry out polycondensation at a temperature of 254°C and a pressure of 125 Pa for 162 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 145 ml/g.

Step iv): The final polymerization product in the step iii) was allowed to pass through a static mixer, 2.4 kg of hexamethylene diisocyanate was added to carry out a blending reaction at 210°C for 9 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 186 ml/g.

Example 9 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.310 kg of tetrabutyl titanate were physically mixed at normal temperature in an esterification reactor, and then, the mixture was allowed to undergo an esterification reaction at 232°C and at a pressure of 98 KPa for 150 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 14 ml/g.

Step ii): The esterification product was introduced into a vertical stirring and full-mixing reactor, 0.230 kg of tetrabutyl titanate was added into the reactor, a reaction was carried out under heating to 243°C at a pressure of 1,000 Pa for 214 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 63 ml/g.

Step iii): 0.16 kg of phosphorous acid was added into the prepolymer in the step ii), meanwhile, the reaction mixture was transferred into a final polymerization reactor to carry out polycondensation at a temperature of 252°C and a pressure of 150 Pa for 164 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 141 ml/g.

Step iv): The final polymerization product in the step iii) was allowed to pass through a static mixer, 3.0 kg of hexamethylene diisocyanate was added to carry out a blending reaction at 195°C for 6 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 188 ml/g.

Example 10 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.395 kg of tetrabutyl titanate were physically mixed at normal temperature in an esterification reactor, and then, the mixture was allowed to undergo an esterification reaction at 235°C and at a pressure of 87 KPa for 190 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 17 ml/g.

Step ii): The esterification product was introduced into a vertical stirring and full-mixing reactor, 0.275 kg of tetrabutyl titanate was added into the reactor, a reaction was carried out under heating to 246°C at a pressure of 1,100 Pa for 220 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 70 ml/g.

Step iii): 0.16 kg of phosphorous acid and 0.035 kg of titanium tetrachloride were added into the prepolymer in the step ii), meanwhile, the reaction mixture was transferred into a final polymerization reactor to carry out polycondensation at a temperature of 253°C and a pressure of 132 Pa for 170 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 148 ml/g.

Step iv): The final polymerization product in the step iii) was allowed to pass through a static mixer, 3.2 kg of hexamethylene diisocyanate was added to carry out a blending reaction at 200°C for 5 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 185 ml/g.

Example 11 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.280 kg of tetrabutyl titanate were physically mixed at normal temperature in an esterification reactor, and then, the mixture was allowed to undergo an esterification reaction at 234°C and at a pressure of 90 KPa for 180 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 18 ml/g.

Step ii): The esterification product was introduced into a vertical stirring and full-mixing reactor, 0.195 kg of tetrabutyl titanate was added into the reactor, a reaction was carried out under heating to 245°C at a pressure of 1,080 Pa for 235 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 70 ml/g.

Step iii): 0.17 kg of phosphorous acid was added into the prepolymer in the step ii), meanwhile, the reaction mixture was transferred into a final polymerization reactor to carry out polycondensation at a temperature of 255°C and a pressure of 116 Pa for 210 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 186 ml/g.

Example 12 provides a biodegradable polyester composition. A preparation method includes the following steps.

Step i): 452 kg of terephthalic acid, 437 kg of adipic acid, 690 kg of 1,4-butanediol, 5.85 kg of glycerol and 0.390 kg of tetrabutyl titanate were physically mixed at normal temperature in an esterification reactor, and then, the mixture was allowed to undergo an esterification reaction at 235°C and at a pressure of 85 KPa for 188 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 18 ml/g.

Step ii): The esterification product was introduced into a vertical stirring and full-mixing reactor, 0.270 kg of tetrabutyl titanate was added into the reactor, a reaction was carried out under heating to 248°C at a pressure of 820 Pa for 205 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 77 ml/g.

Step iii): 0.18 kg of phosphorous acid and 0.032 kg of titanium tetrachloride were added into the prepolymer in the step ii), meanwhile, the reaction mixture was transferred into a final polymerization reactor to carry out polycondensation at a temperature of 255°C and a pressure of 126 Pa for 196 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 178 ml/g.

Step iv): The final polymerization product in the step iii) was allowed to pass through a static mixer, 3.8 kg of hexamethylene diisocyanate was added to carry out a blending reaction at 198°C for 7 min, and granulation and drying were carried out to obtain a chain growth product, wherein a viscosity number of the chain growth product determined in a phenol/o-dichlorobenzene solution with a weight ratio of 1:1 under a constant-temperature water bath at 25±0.05°C according to GB/T 17931-1999 was 218 ml/g.

Example 13 provides a biodegradable polyester composition. A preparation method includes the following steps.

Step i): 452 kg of terephthalic acid, 437 kg of adipic acid, 690 kg of 1,4-butanediol, 1.85 kg of glycerol and 0.385 kg of tetrabutyl titanate were physically mixed at normal temperature in an esterification reactor, and then, the mixture was allowed to undergo an esterification reaction at 228°C and at a pressure of 105 KPa for 176 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 15 ml/g.

Step ii): The esterification product was introduced into a vertical stirring and full-mixing reactor, 0.283 kg of tetrabutyl titanate was added into the reactor, a reaction was carried out under heating to 247°C at a pressure of 1,400 Pa for 186 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 64 ml/g.

Step iii): 0.17 kg of phosphorous acid and 0.025 kg of titanium tetrachloride were added into the prepolymer in the step ii), meanwhile, the reaction mixture was transferred into a final polymerization reactor to carry out polycondensation at a temperature of 254°C and a pressure of 110 Pa for 170 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 160 ml/g.

Example 14 provides a biodegradable polyester composition. A preparation method includes the following steps.

Step i): 452 kg of terephthalic acid, 437 kg of adipic acid, 690 kg of 1,4-butanediol and 0.355 kg of tetrabutyl titanate were physically mixed at normal temperature in an esterification reactor, and then, the mixture was allowed to undergo an esterification reaction at 228°C and at a pressure of 105 KPa for 170 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 14 ml/g.

Step ii): The esterification product was introduced into a vertical stirring and full-mixing reactor, 0.270 kg of tetrabutyl titanate was added into the reactor, a reaction was carried out under heating to 243°C at a pressure of 1,670 Pa for 176 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 62 ml/g.

Step iii): 0.17 kg of phosphorous acid and 0.038 kg of titanium tetrachloride were added into the prepolymer in the step ii), meanwhile, the reaction mixture was transferred into a final polymerization reactor to carry out polycondensation at a temperature of 252°C and a pressure of 180 Pa for 184 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 152 ml/g.

The molar contents of the aromatic dicarboxylic acid and the aliphatic dicarboxylic acid, the content of the titanium element and the acid number of the biodegradable polyester compositions in Examples 1-14 are shown in Table 1.

**Table 1 Molar contents of carboxylic acid monomers, a content of a titanium element and an acid number in Examples 1-10**

| | Exampl e 1 | Exampl e 2 | Exampl e 3 | Exampl e 4 | Exampl e 5 | Exampl e 6 | Exampl e 7 |
|---|---|---|---|---|---|---|---|
| Terephthalic acid/mol% | 47.3 | 50.6 | 44.0 | 40.0 | 52.0 | 51.0 | 50.0 |
| Adipic acid/mol% | 52.7 | 49.4 | 56.0 | 60.0 | 48.0 | 49.0 | / |
| Sebacic acid/mol% | / | / | / | / | / | / | 50.0 |
| Content of titanium element/ppm | 72 | 72 | 72 | 72 | 72 | 72 | 72 |
| Acid number/mg KOH/g | 1.30 | 1.28 | 1.30 | 1.31 | 1.32 | 1.31 | 1.30 |

| | Exampl e 8 | Exampl e 9 | Example 10 | Example 11 | Example 12 | Example 13 | Example 14 |
|---|---|---|---|---|---|---|---|
| Terephthalic acid/mol% | 47.6 | 47.6 | 47.6 | 47.6 | 47.6 | 47.6 | 47.6 |
| Adipic acid/mol% | 52.4 | 52.4 | 52.4 | 52.4 | 52.4 | 52.4 | 52.4 |
| Content of titanium element/ppm | 79 | 63 | 86 | 55 | 84 | 83 | 81 |
| Acid number/mg KOH/g | 1.45 | 1.18 | 1.10 | 1.96 | 1.14 | 1.12 | 1.10 |

### Comparative Examples 1-7

Comparative Example 1 provides a biodegradable polyester composition. A preparation method includes the following steps.

Step i): 305 kg of terephthalic acid, 437 kg of adipic acid, 690 kg of 1,4-butanediol, 2.90 kg of glycerol and 0.325 kg of tetrabutyl titanate were physically mixed at normal temperature in an esterification reactor, and then, the mixture was allowed to undergo an esterification reaction at 220°C and at a pressure of 110 KPa for 124 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 9 ml/g.

Step ii): The esterification product was introduced into a vertical stirring and full-mixing reactor, 0.190 kg of tetrabutyl titanate was added into the reactor, a reaction was carried out under heating to 250°C at a pressure of 2,300 Pa for 230 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 57 ml/g.

Step iii): 0.14 kg of phosphorous acid was added into the prepolymer in the step ii), meanwhile, the reaction mixture was transferred into a final polymerization reactor to carry out polycondensation at a temperature of 252°C and a pressure of 100 Pa for 177 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 173 ml/g.

Comparative Example 2 provides a biodegradable polyester composition. A preparation method includes the following steps.

Step i): 585 kg of terephthalic acid, 437 kg of adipic acid, 760 kg of 1,4-butanediol, 3.90 kg of glycerol and 0.465 kg of tetrabutyl titanate were physically mixed at normal temperature in an esterification reactor, and then, the mixture was allowed to undergo an esterification reaction at 238°C and at a pressure of 65 KPa for 160 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 26 ml/g.

Step ii): The esterification product was introduced into a vertical stirring and full-mixing reactor, 0.245 kg of tetrabutyl titanate was added into the reactor, a reaction was carried out under heating to 250°C at a pressure of 1,900 Pa for 225 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 81 ml/g.

Step iii): 0.19 kg of phosphorous acid was added into the prepolymer in the step ii), meanwhile, the reaction mixture was transferred into a final polymerization reactor to carry out polycondensation at a temperature of 250°C and a pressure of 110 Pa for 165 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 171 ml/g.

Comparative Example 3 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.383 kg of tetrabutyl titanate were physically mixed at normal temperature in an esterification reactor, and then, the mixture was allowed to undergo an esterification reaction at 240°C and at a pressure of 60 KPa for 210 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 33 ml/g.

Step ii): The esterification product was introduced into a vertical stirring and full-mixing reactor, 0.260 kg of tetrabutyl titanate was added into the reactor, a reaction was carried out under heating to 245°C at a pressure of 800 Pa for 240 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 87 ml/g.

Step iii): 0.10 kg of phosphorous acid and 0.012 kg of titanium tetrachloride were added into the prepolymer in the step ii), meanwhile, the reaction mixture was transferred into a final polymerization reactor to carry out polycondensation at a temperature of 252°C and a pressure of 105 Pa for 180 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 183 ml/g.

Comparative Example 4 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.330 kg of tetrabutyl titanate were physically mixed at normal temperature in an esterification reactor, and then, the mixture was allowed to undergo an esterification reaction at 230°C and at a pressure of 100 KPa for 120 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 10 ml/g.

Step ii): The esterification product was introduced into a vertical stirring and full-mixing reactor, 0.230 kg of tetrabutyl titanate was added into the reactor, a reaction was carried out under heating to 240°C at a pressure of 2,200 Pa for 198 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 48 ml/g.

Step iii): 0.21 kg of phosphorous acid was added into the prepolymer in the step ii), meanwhile, the reaction mixture was transferred into a final polymerization reactor to carry out polycondensation at a temperature of 248°C and a pressure of 170 Pa for 288 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 185 ml/g.

Comparative Example 5 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.225 kg of tetrabutyl titanate were physically mixed at normal temperature in an esterification reactor, and then, the mixture was allowed to undergo an esterification reaction at 220°C and at a pressure of 100 KPa for 130 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 8 ml/g.

Step ii): The esterification product was introduced into a vertical stirring and full-mixing reactor, 0.155 kg of tetrabutyl titanate was added into the reactor, a reaction was carried out under heating to 245°C at a pressure of 1,600 Pa for 210 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 53 ml/g.

Step iii): 0.12 kg of phosphorous acid was added into the prepolymer in the step ii), meanwhile, the reaction mixture was transferred into a final polymerization reactor to carry out polycondensation at a temperature of 258°C and a pressure of 110 Pa for 260 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 186 ml/g.

Comparative Example 6 provides a biodegradable polyester composition. A preparation method includes the following steps.

Step i): 452 kg of terephthalic acid, 437 kg of adipic acid, 690 kg of 1,4-butanediol, 3.45 kg of glycerol and 0.425 kg of tetrabutyl titanate were physically mixed at normal temperature in an esterification reactor, and then, the mixture was allowed to undergo an esterification reaction at 230°C and at a pressure of 85 KPa for 160 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 22 ml/g.

Step ii): The esterification product was introduced into a vertical stirring and full-mixing reactor, 0.295 kg of tetrabutyl titanate was added into the reactor, a reaction was carried out under heating to 240°C at a pressure of 1,300 Pa for 180 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 61 ml/g.

Step iii): 0.23 kg of phosphorous acid and 0.038 kg of titanium tetrachloride were added into the prepolymer in the step ii), meanwhile, the reaction mixture was transferred into a final polymerization reactor to carry out polycondensation at a temperature of 250°C and a pressure of 135 Pa for 240 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 183 ml/g.

Comparative Example 7 provides a biodegradable polyester composition. A preparation method includes the following steps.

Step i): 800 kg of succinic acid, 1,038 kg of 1,4-butanediol, 3.45 kg of glycerol and 0.449 kg of tetrabutyl titanate were physically mixed at normal temperature in an esterification reactor, and then, the mixture was allowed to undergo an esterification reaction at 200°C and at a pressure of 90 KPa for 190 min to obtain an esterification product, wherein a viscosity number of the esterification product determined in a phenol/o-dichlorobenzene solution with a weight ratio of 1:1 under a constant-temperature water bath at 25±0.05°C according to GB/T 17931-1999 was 21 ml/g.

Step ii): The esterification product was introduced into a vertical stirring and full-mixing reactor after passed through a static mixer, 0.241 kg of tetrabutyl titanate was added into the reactor, a reaction was carried out under heating to 240°C at a pressure of 2,000 Pa for 250 min, and most of the excessive 1,4-butanediol was removed by distillation to obtain a prepolymer, wherein a viscosity number of the prepolymer determined in a phenol/o-dichlorobenzene solution with a weight ratio of 1:1 under a constant-temperature water bath at 25±0.05°C according to GB/T 17931-1999 was 62 ml/g.

Step iii): 0.18 kg of phosphorous acid was added into the prepolymer in the step ii), meanwhile, the reaction mixture was transferred into a final polymerization reactor to carry out polycondensation at a temperature of 245°C and a pressure of 140 pa for 190 min, and the remaining excessive 1,4-butanediol and other by-products were removed by distillation to obtain a final polymerization product, wherein a viscosity number of the final polymerization product determined in a phenol/o-dichlorobenzene solution with a weight ratio of 1:1 under a constant-temperature water bath at 25±0.05°C according to GB/T 17931-1999 was 214 ml/g.

The molar contents of the aromatic dicarboxylic acid and the aliphatic dicarboxylic acid, the content of the titanium element and the acid number of the biodegradable polyester compositions in Comparative Example 1-7 are shown in Table 2.

**Table 2 Molar contents of carboxylic acid monomers, a content of a titanium element and an acid number in Comparative Examples 1-7**

| | Comparative Example | | | | | | |
|---|---|---|---|---|---|---|---|
| | 1 | 2 | 3 | 4 | 5 | 6 | 7 |
| Terephthalic acid/mol% | 38.1 | 53.9 | 47.6 | 47.6 | 47.6 | 47.6 | / |
| Adipic acid/mol% | 61.9 | 46.1 | 52.4 | 52.4 | 52.4 | 52.4 | / |
| Succinic acid/mol% | / | / | / | / | / | / | 100 |
| Content of titanium element/ppm | 72 | 72 | 78 | 65 | 44 | 92 | 83 |
| Acid number/mg KOH/g | 1.31 | 1.32 | 0.86 | 2.18 | 1.82 | 1.57 | 1.21 |

### Performance tests

Performance tests were carried out on the biodegradable polyester compositions prepared in examples and comparative examples above. Specific methods are as follows.
(1) Initial melt flow rate: A test was carried out at 190°C and 2.16 kg in accordance with the EN ISO 1133-2-2011 standard.
(2) Melt flow rate change ratio:
   1) A biodegradable polyester composition sample was dehumidified and dried at 80°C for 4 h, and an initial melt index MFR₀ of the sample before storage in a constant temperature and humidity chamber was tested according to the standard EN ISO 1133-2-2011 (190°C, 2.16 kg).
   2) After being packaged with gauze, 10-15 g of the biodegradable polyester composition sample was placed in the constant temperature and humidity chamber at 60°C and at a humidity of 95% for 72 h. After 72 h, the biodegradable polyester composition sample was taken out of the constant temperature and humidity chamber and transferred into a dryer for storage at an ambient temperature for 24 h to achieve equilibrium conditions in the sample. After equilibrium was reached, the sample was dehumidified and dried at 80°C for 4 h, and a melt index MFR₁ of the sample placed for 72 h was tested according to the standard EN ISO 1133-2-2011 (190°C, 2.16 kg).

The melt flow rate change ratio before and after storage is η=MFR₁/MFR₀,
the MFR₁ represents a melt flow rate of the biodegradable polyester composition after storage at 60°C and at a humidity of 95% for 72 h, and the MFR₀ represents an initial melt flow rate of the biodegradable polyester composition before storage.

The larger melt index change ratio η before and after storage indicates that the sample has a higher performance degradation rate during storage and poorer anti-aging performance; and the smaller melt index change ratio η before and after storage indicates that the material has stable performance, a lower performance degradation rate during storage and better anti-aging performance.

### (3) Weight retention rate:

A test was carried out in accordance with a method of the ISO 14855-1(2012) standard. First, a biodegradable polyester composition sample was pressed into a thin film with a thickness of 35±3 µm and then cut into a sample piece of 10 cm×10 cm, wherein a weight of the sample was recorded as M₀ at this time. Then, the sample piece was buried in compost soil and placed in a constant temperature and humidity chamber at a constant experimental temperature of (28±2)°C and a humidity of 60±5%, and after 42 days, the compost sample piece was taken out, washed, dried and weighed, wherein a weight of the sample was recorded as M₁ at this time. Sample weight retention rate=M₁/M₀×100%.

The lower sample weight retention rate indicates that the biodegradable polyester composition has better disintegration performance.

The thin film was prepared by the following method:
the biodegradable polyester composition was dehumidified and dried at a temperature of 80°C for 4 h and then put into a film blowing machine for film blowing, wherein a diameter of a screw was 55 mm, a length-to-diameter ratio was 30:1, a rotation speed of the screw during extrusion was set at 30 r/min, a melt temperature was 145°C, respectively, a blow up ratio was 3.5, and specifications of the thin film included a width of 550 mm and a thickness of 35±3 µm.

Test results of examples are shown in Table 3, and test results of comparative examples are shown in Table 4.

**Table 3 Test results of examples**

| | Example 1 | Example 2 | Example 3 | Example 4 | Example 5 |
|---|---|---|---|---|---|
| Initial melt flow rate (g/10 min) | 5.4 | 5.2 | 5.4 | 5.1 | 5.4 |
| Melt flow rate change ratio η | 2.56 | 2.35 | 2.95 | 3.17 | 3.03 |
| Weight retention rate (%) | 14.67 | 15.24 | 16.32 | 19.27 | 20.56 |

| | Example 6 | Example 7 | Example 8 | Example 9 | Example 10 |
|---|---|---|---|---|---|
| Initial melt flow rate (g/10 min) | 5.3 | 2.1 | 3.7 | 3.6 | 3.8 |
| Melt flow rate change ratio η | 2.72 | 2.44 | 2.63 | 2.40 | 3.23 |
| Weight retention rate (%) | 18.00 | 13.15 | 14.31 | 15.78 | 24.31 |

| | Example 11 | Example 12 | Example 13 | Example 14 | - |
|---|---|---|---|---|---|
| Initial melt flow rate (g/10 min) | 3.6 | 1.0 | 8.5 | 10 | - |
| Melt flow rate change ratio η | 3.47 | 3.58 | 3.74 | 3.90 | - |
| Weight retention rate (%) | 22.18 | 27.61 | 25.87 | 30.00 | - |

**Table 4 Test results of comparative examples**

| | Comparative Example | | | | | | |
|---|---|---|---|---|---|---|---|
| | 1 | 2 | 3 | 4 | 5 | 6 | 7 |
| Initial melt flow rate (g/10 min) | 5.4 | 5.3 | 4.0 | 3.7 | 3.6 | 3.9 | 3.3 |
| Melt flow rate change ratio η | 4.37 | 2.98 | 2.23 | 4.45 | 3.33 | 3.47 | 4.70 |
| Weight retention rate (%) | 15.73 | 41.12 | 33.31 | 20.35 | 36.24 | 34.77 | 45.31 |

According to the test results in Table 3, it can be seen that the melt flow rate change ratio η of the biodegradable polyester compositions prepared in examples of the present invention is ≤3.90, and the melt flow rate change ratios η in some preferred examples is ≤2.95, indicating that the biodegradable polyester compositions have good anti-aging performance and a better performance retention rate during a shelf life; and the weight retention rate of the biodegradable polyester compositions prepared in examples of the present invention is ≤30.00%, and the weight retention rate in some preferred examples is ≤18%, indicating that the biodegradable polyester compositions have excellent disintegration performance.

From Examples 1-6, under the circumstance that the content of the titanium element is unchanged and the acid number is basically the same, when the contents of the carboxylic acid monomers are adjusted within the scope of the technical solutions of the present invention, the melt flow rate change ratio η and the weight retention rate in Example 1 and Example 2 are relatively lower, followed by Example 3 and Example 6. Thus, preferably, the component a1 is 47.3-50.6 mol%, and the component a2 is 49.4-52.7 mol%.

From Comparative Examples 3-6, it can be seen that when the acid number of the biodegradable polyester composition is too low or too high or the content of the titanium element is too low or too high, the biodegradable polyester composition with both good anti-aging performance and excellent disintegration performance cannot be obtained.

From Examples 8-11, under the circumstance that the molar contents of the carboxylic acid monomers are maintained consistent, it can be seen that changes in the content of the titanium element and the acid number have an impact on the anti-aging performance and disintegration performance of the degradable polyester composition, wherein the melt flow rate change ratio η and the weight retention rate in Example 8 and Example 9 are relatively lower. Thus, preferably, the content of the titanium element in the biodegradable polyester composition is 63-79 ppm, and the acid number is 1.18-1.45 mg KOH/g.

According to Comparative Example 1 and Comparative Example 2, when the molar contents of the aromatic dicarboxylic acid and the aliphatic dicarboxylic acid exceeds the scope of the technical solutions of the present invention, the biodegradable polyester composition with both good anti-aging performance and excellent disintegration performance cannot be obtained.

In Comparative Example 7, when 100 mol% of the succinic acid (aliphatic dicarboxylic acid) is used as a carboxylic acid monomer, the melt index change ratio η of the biodegradable polyester composition stored at 60°C and at a humidity of 95% for 72 h is as high as 4.7, the sample weight retention rate reaches 45.31% after 42 days under composting conditions, and the biodegradable polyester composition does not have good anti-aging performance and has poor disintegration performance.

Obviously, the above examples of the present invention are only instances for clearly illustrating the present invention and are not limitations of the embodiments of the present invention. For those of ordinary skill in the art, other changes or alternations in different forms can also be made on the basis of the above description. It is not necessary and possible to list all of the embodiments herein. Any modifications, equivalent substitutions, improvements and the like made within the spirit and principles of the present invention shall be included in the scope of protection of the claims of the present invention.

## Claims

1. A biodegradable polyester composition, comprising a biodegradable polyester and a titanium element, wherein
polymerizable monomers of the biodegradable polyester comprise:
component A, a dicarboxylic acid compound, based on a total molar amount of the component A, comprising:
a1, 40-52 mol% of an aromatic dicarboxylic acid or an esterified product thereof, or a mixture thereof, and
a2, 48-60 mol% of an aliphatic dicarboxylic acid or an esterified product thereof, or a mixture thereof;
component B, a dihydroxy compound, based on the total molar amount of the component A, comprising: a C₂-C₆ aliphatic alkanediol with at least the same molar amount as the component A, or a mixture thereof; and
component C, a chain extender, accounting for 0-3 wt.% based on a weight of the biodegradable polyester composition;
wherein a content of the titanium element in the biodegradable polyester composition is 55 ppm - 86 ppm; and
an acid number of the biodegradable polyester composition is 1.10 mg KOH/g - 1.96 mg KOH/g.

2. The biodegradable polyester composition according to claim 1, wherein the content of the titanium element in the biodegradable polyester composition is 63 ppm - 79 ppm.

3. The biodegradable polyester composition according to claim 1, wherein the acid number of the biodegradable polyester composition is 1.18 mg KOH/g - 1.45 mg KOH/g.

4. The biodegradable polyester composition according to claim 1, wherein the component A comprises:
a1, 44-51 mol% of the aromatic dicarboxylic acid or an esterified product thereof, or a mixture thereof, and
a2, 49-56 mol% of the aliphatic dicarboxylic acid or an esterified product thereof, or a mixture thereof.

5. The biodegradable polyester composition according to claim 4, wherein the component A comprises:
a1, 47.3-50.6 mol% of the aromatic dicarboxylic acid or an esterified product thereof, or a mixture thereof, and
a2, 49.4-52.7 mol% of the aliphatic dicarboxylic acid or an esterified product thereof, or a mixture thereof.

6. The biodegradable polyester composition according to claim 1, wherein the monomers for preparing the biodegradable polyester comprise:
the component A, comprising:
a1, terephthalic acid or an ester thereof, and
a2, adipic acid or sebacic acid, an ester thereof, or a mixture thereof;
the component B, comprising:
b1, 1,4-butanediol, and
b2, one or more of glycerol, pentaerythritol, or trimethylolpropane; and
the component C, hexamethylene diisocyanate.

7. The biodegradable polyester composition according to claim 1, wherein a melt flow rate of the biodegradable polyester composition at 190°C and 2.16 kg is ≤10 g/10 min.

8. The biodegradable polyester composition according to claim 7, wherein the melt flow rate of the biodegradable polyester composition at 190°C and 2.16 kg is 1 g/10 min - 8.5 g/10 min.

9. The biodegradable polyester composition according to claim 1, wherein when the biodegradable polyester composition is stored at 60°C and at a humidity of 95% for 72 h, a melt flow rate change ratio η before and after storage is ≤3.90, and η=MFR₁/MFR₀, wherein MFR₁ represents a melt flow rate of the biodegradable polyester composition after storage at 60°C and at a humidity of 95% for 72 h, and MFR₀ represents an initial melt flow rate of the biodegradable polyester composition before storage.

10. The biodegradable polyester composition according to claim 9, wherein when the biodegradable polyester composition is stored at 60°C and at a humidity of 95% for 72 h, the melt flow rate change ratio η before and after storage is ≤2.95.

11. The biodegradable polyester composition according to claim 1, wherein with reference to a method of the ISO 14855-1-2012 standard, a weight retention rate of the biodegradable polyester composition placed for 42 days is ≤30%.

12. The biodegradable polyester composition according to claim 1, wherein with reference to a method of the ISO 14855-1-2012 standard, a weight retention rate of the biodegradable polyester composition placed for 42 days is ≤18%.

13. A method for preparing the biodegradable polyester composition according to any one of claims 1-12, comprising the following steps:
mixing the component A and the component B with or without addition of a titanium catalyst to generate a paste, and then carrying out the following operations:
step i), allowing the paste to undergo an esterification or transesterification reaction with all or a part of the titanium catalyst until a viscosity number of an esterification or transesterification product determined in a phenol/o-dichlorobenzene solution with a weight ratio of 1:1 under a constant-temperature water bath at 25±0.05°C according to GB/T 17931-1999 is 14 ml/g - 19 ml/g;
step ii), allowing the esterification or transesterification product obtained in the step i) to undergo a pre-polycondensation reaction until a viscosity number of a prepolymer determined in a phenol/o-dichlorobenzene solution with a weight ratio of 1:1 under a constant-temperature water bath at 25±0.05°C according to GB/T 17931-1999 is 62 ml/g - 78 ml/g;
step iii), allowing the prepolymer obtained in the step ii) to undergo a polycondensation reaction until a viscosity number of a final polymerization product determined in a phenol/o-dichlorobenzene solution with a weight ratio of 1:1 under a constant-temperature water bath at 25±0.05°C according to GB/T 17931-1999 is 140 ml/g - 210 ml/g so as to obtain the biodegradable polyester composition; and
if necessary, under the circumstance of containing the component C, carrying out a step iv) after the step iii): allowing the final polymerization product obtained in the step iii) and the chain extender to undergo a chain extension reaction until a viscosity number of a chain growth product determined in a phenol/o-dichlorobenzene solution with a weight ratio of 1:1 under a constant-temperature water bath at 25±0.05°C according to GB/T 17931-1999 is 160 ml/g - 240 ml/g so as to obtain the biodegradable polyester composition.

14. The preparation method according to claim 13, wherein the titanium catalyst is tetrabutyl titanate and/or tetraisopropyl titanate.

15. The preparation method according to claim 13, wherein between the step ii) and the step iii), a titanium-containing compound, other than the titanium catalyst, is added into the reaction system.

16. The preparation method according to claim 15, wherein an addition amount of the titanium-containing compound is 0 - 0.06 wt.%, based on a weight of the final polymerization product after the step iii).

17. The preparation method according to claim 15, wherein the titanium-containing compound is one or more of titanium dioxide, titanium tetrachloride, ferrous titanate, or barium metatitanate.

18. The preparation method according to claim 13, wherein between the step ii) and the step iii), a passivator is added into the reaction system.

19. The preparation method according to claim 18, wherein an addition amount of the passivator is 0.01 - 0.08 wt.%, based on a weight of the final polymerization product after the step iii).

20. The preparation method according to claim 18, wherein the passivator is a phosphorus compound.

21. A degradable mixture, comprising the following parts by weight of components:
5 - 95 parts of the biodegradable polyester composition according to any one of claims 1-12,
and
5 - 95 parts of one or more of an aliphatic polyester, starch, cellulose, polyhydroxyalkanoate, polyglycolic acid, or polylactic acid.

22. Use of the degradable mixture according to claim 21 in preparation of fruit and vegetable bags and garbage bags.
